# EUROPEAN PATENT SPECIFICATION

(11) **EP 1 351 120 B1**
(45) Date of publication and mention of the grant of the patent: **25.10.2017**
(21) Application number: 02388029.7
(22) Date of filing: 03.04.2002
(51) Int. Cl.: G06F 3/0338, G06F 3/0482

(54) **A method of navigating in a virtual three-dimensional environment and an electronic device employing such method**
Verfahren zur Navigation in einer virtuellen, dreidimensionalen Umgebung und elektronische Vorrichtung zur Anwendung eines solchen Verfahrens
Procédé de navigation dans un environnement virtuel à trois dimensions et dispositif électronique utilisant une telle méthode

(43) Date of publication of application: 08.10.2003
(73) Proprietor: Sony Mobile Communications Inc., Shinagawa-ku Tokyo 140-0002 (JP)
(72) Inventor: Nilsson, Leif, 211 55 Malmö (SE); Berg, Thomas, 226 43 Lund (SE)
(74) Representative: Kraus & Weisert Patentanwälte PartGmbB

(56) References cited:
- EP-A- 0 869 343
- US-A1- 2001 015 718

## Description

### Technical field

The invention relates to a method of navigating in a virtual three-dimensional environment in an electronic device, wherein a movable physical member is controlled by applying a finger of a user to the movable physical member, and to an electronic device comprising a movable physical member for navigating in a virtual three-dimensional environment, said movable physical member being arranged for being controlled by a finger of a user applied to a user surface of the movable physical member.

### Related prior art

The term "virtual three-dimensional environment" when used in this specification is to be understood as e.g. a hierarchically structured menu system as it is commonly known in electronic devices, such as computers, mobile telephones, PDAs (Personal Digital Assistant), etc.

There exist different methods of navigating in such virtual three-dimensional environments in an electronic device, including the use of depressable keys, a joystick or a soft-key provided on a display. In e.g. a mobile telephone the navigation is conventionally performed by use of "Yes" and "No" keys and a kind of scroll key that may comprise two keys (up/down or left/right). In this embodiment at least three and possibly four keys are necessary to navigate sideways and up and down in the hierarchy of the virtual three-dimensional environment. This means that the finger used for navigating must be moved between these different keys. Additionally, it is known to employ a movable physical member, such as a joystick, for navigating in a virtual three-dimensional environment. The joystick may be movable in four different directions in the same plane and may also be depressed. By moving the joystick in any one of the four directions in the same plane it is possible to navigate through a menu system of the virtual three-dimensional environment and by depressing the joystick the actual command is entered into the electronic device. EP-A-0 869 343 discloses a joystick of this kind. WO 01/28199 discloses an electronic device provided with such a joystick which may be moved in four different directions and may be depressed. The electronic device is provided with means whereby a first function is achieved if the joystick is depressed for a long time and another function if the joystick is depressed for a short time only.

A similar depressing-time dependent function is disclosed in US-A-5 923 327 in which the key to be depressed is incorporated in a display screen and the user touches the display screen for navigating in the virtual three-dimensional environment.

US 2001/015718 A1 discloses an input device which has an auxiliary control. When the user contacts the auxiliary control a display widget is shown on or removed from the display. In order to prevent the display widget from blinking when the user temporarily removes his or her finger from the auxiliary control, the input device has timing means which registers the time which elapses between a user removing his or her finger from the auxiliary control and a user re-applying his or her finger to the auxiliary control. If the amount of time is below a certain threshold, then no action is taken and the display widget remains shown on the display.

When navigating in a virtual three-dimensional environment it is desirable to be able to navigate in six mutually right-angled directions. As described above this may be achieved by providing a plurality of hard keys and/or soft keys that each represents movement in one or two directions when depressed, or by providing a joystick that allows movement in a plurality of directions. However, a disadvantage by the known electronic device provided with means for navigating in a virtual three-dimensional environment is that for moving upwards in the hierarchy of commands a special key or a joystick must be depressed, possibly for a preset period of time.

Depressing a key or a joystick for moving upwards in a virtual three-dimensional environment seems, however, to be illogical since the movement of the finger of the user is in the exact opposite direction, i.e. a downwardly depression. This problem has been solved by a joystick disclosed in JP-8050532 which is movable in six different directions. With this joystick it is possible to navigate upwards simply by pulling the joystick upwards.

However, this solutions is impractical if the electronic device and thereby the movable physical member for navigation is small as it is the case when the electronic device is e.g. a mobile telephone.

### Object of the invention

It is therefore an object of the invention to provide a method and an electronic device for navigating in a virtual three-dimensional environment by applying a finger to a movable physical member, in which method and electronic device the above-mentioned disadvantages have been overcome.

### Summary of the invention

The object of the invention is achieved by providing the method mentioned in the opening paragraph such that navigation in one direction is achieved in accordance with the invention by a method according to claim 1.

Thereby a new and simple method of navigating in one direction is obtained, which method does not require movement of the movable physical member as such or movement of the finger to another key to be depressed, but only requires a special movement of a finger applied to the movable physical member.

The time limit to re-apply the finger to the movable physical member may be set at any desired size. Preferably, however, it is below a few seconds which should be suitable for most appliances and most users should be able to remove and re-apply the finger within such time limit.

The navigation achieved by the method according to the invention is a step upwards in a hierarchy of commands in the virtual three-dimensional environment. An upwards navigation in the hierarchy of the virtual three-dimensional environment is in conformity with the movement of the finger which is lifted or moved upwards before it is re-applied to the movable physical member.

The object of the invention is also achieved in accordance with the invention by a device according to claim 4. By providing the movable physical member with such sensing means it is suitable for carrying out a new method of navigating in a virtual three-dimensional environment.

In a first embodiment of the invention the sensing means comprises an IR (infra red) diode and an IR detector arranged in such manner that the IR light is reflected from the IR diode to the IR detector by the finger when the finger is applied to or is in the proximity of the user surface of the movable physical member. When it is desired to perform the navigation by the method according to the invention the finger must be removed and re-applied to the user surface of the movable physical member within a short period of time. The finger must be removed to a distance where the IR light is no longer reflected by the finger.

The IR diode and the IR detector is preferably positioned at a base of the movable physical member, and two light guides extend from the base of the movable physical member to the user surface of the movable physical member. Thereby the movable physical member can be made smaller than if the IR diode and the IR detector were to be incorporated in the movable physical member.

In a second embodiment of the invention the sensing means comprises a micro switch provided at the user surface of the movable physical member, which micro switch is depressed when a finger is applied to the user surface of the movable physical member. By using a micro switch in connection with the user surface of the movable physical member it is easily registered whether a finger is applied to the user surface or not.

In a third embodiment the sensing means comprises two conductive areas at the user surface of the movable physical member, which two conductive areas are arranged to be electrically short-circuited when a finger is applied to the user surface. In this way it is also easily registered whether a finger is applied to the user surface or not.

The virtual three-dimensional environment comprises a hierarchically organised menu system, and the navigation direction achieved is a step upwards in a hierarchy of commands in the virtual three-dimensional environment. By providing the achieved navigation to be a step upwards in the virtual three-dimensional environment it is brought into conformity with the movement of the finger which will typically also be upwards when it is removed from the user surface of the movable physical member.

The electronic device is provided with a display adapted to graphically display at least a part of the menu system so that the user is assisted in his navigation through the virtual three-dimensional environment.

In a preferred embodiment for the electronic device the movable physical member is a joystick that is movable in different directions.

The invention is especially suitable for small electronic devices like a mobile communications device, such as a mobile telephone.

It shall be emphasised that the term "comprise/comprising" when used in this specification is taken to specify the presence of stated features, integers, steps or components but does not preclude the presence or addition of one or more other features, integers, steps components or groups thereof.

### Description of the drawings

The invention will be described in detail in the following with reference to the drawings in which
Fig. 1 shows an electronic device according to the invention provided with a movable physical member;
Fig. 2 shows a first embodiment of a movable physical member provided in an electronic device according to the invention;
Fig. 3 shows a second embodiment of a movable physical member provided in an electronic device according to the invention;
Fig. 4 shows a third embodiment of a movable physical member provided in an electronic device according to the invention; and
Fig. 5 shows a flow chart illustrating the process of the electronic device for performing the method of navigating according to the invention.

### Detailed description of an embodiment of the invention

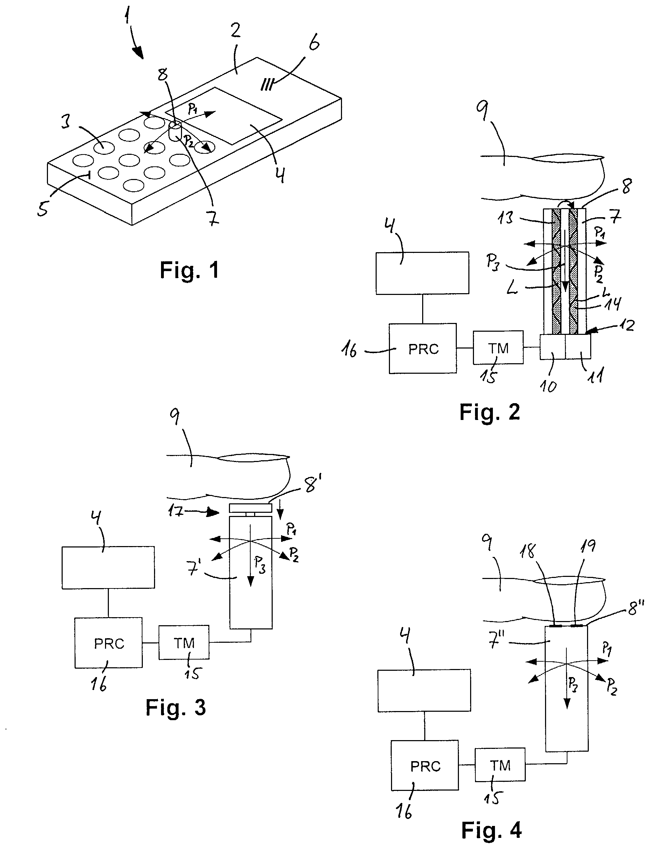

Fig. 1 shows an electronic device in the form of mobile telephone 1 comprising a housing 2 with openings for keys 3, a display 4, a microphone 5 and a loudspeaker 6. All these elements are generally known in the art and are not part of the present invention.

Additionally, the mobile telephone 1 is provided with a movable physical member 7 that has, in the shown embodiment, the function of a joystick for navigating through a virtual three-dimensional environment provided in the mobile telephone 1 and being graphically displayed in the display 4. The movable physical member 7 is provided with a user surface 8 and is arranged to be movable in four different directions as indicated by the double arrows P₁ and P₂, preferably by being tilted about a point at the lower end of the movable physical member 7. A movement of the movable physical member 7 in any one of these directions causes a certain navigation step in the virtual three-dimensional environment to be performed. The navigation step performed may be dependent on the state of the mobile telephone 1 and of the actual position in the virtual three-dimensional environment. The movable physical member 7 is also arranged to be depressable in order to activate a command at any chosen position in the virtual three-dimensional environment.

In accordance with the invention, the movable physical member 7 is furthermore provided with sensing means for sensing if a finger or the like is applied to the user surface 8. The sensing means is connected to a timer in a processor provided in the mobile telephone 1 and if the processor registers that the finger is removed from and re-applied to the user surface 8 of the movable physical member 7 within a set time limit a predefined navigation step in the virtual three-dimensional environment is performed. In a preferred embodiment the navigation step achieved is a movement upwards or backwards in the virtual three-dimensional environment. By ascribing such a navigation step to the action of removing and re-applying a finger to the user surface 8 of the movable physical member 7 within a set time limit, the movement of the finger (upwards) is in full conformity with the desired direction of movement in the virtual three-dimensional environment. Other navigation steps may of course be ascribed to the action, if desired.

Fig. 2 shows schematically a first embodiment of a movable physical member 7. The movable physical member 7 is rod-shaped and is connected to the electronic device, such as the mobile telephone 1 shown in Fig. 1, in a commonly known manner that will not be described in detail. A person skilled in the art of electronic devices can easily provide such connection.

As mentioned above with reference to Fig. 1, the movable physical member 7 is provided with a user surface 8 to which a finger 9 may be applied and is arranged to be tiltable in the directions of the double arrows P₁ and P₂. The movable physical member 7 is also depressable in direction of the arrow P₃. A movable physical member 7 arranged in this manner is generally known in the art.

Apart from the provisions described above, the movable physical member 7 is provided with sensing means for sensing if a finger is applied to the user surface 8 of the movable physical member 7. In the first embodiment shown in Fig. 2 the sensing means comprises an IR (infra red) diode 10 and an IR detector provided at the base 12 of the movable physical member 7. The movable physical member 7 is provided with a first light guide 13 and a second light guide 14, each extending from the base 12 of the movable physical member 7 to the user surface 8 thereof. The IR diode 10 emits IR light illustrated by the arrow L that, via the light guide 13, is guided to the user surface 8. If a finger 9 is applied to the user surface 8 or is in the proximity of the user surface 8 as shown in Fig. 2, the IR light L from the light guide 13 is reflected by the finger 9 and transmitted via the light guide 14 to the IR detector 11. In relation to this embodiment the term of "applying a finger 9 to the user surface 8" means any position of the finger 9 where the IR light L is reflected, i.e. the situation where the finger 9 is in physical contact with the user surface 8 as well as the situation where the finger 9 is positioned in the proximity of the user surface 8.

Now, if the finger 9 is removed from the user surface 8 or from its proximity, the IR light L will no longer be reflected which is registered in the electronic device. If the finger 9 is re-applied to the user surface 8 within the set time limit, whereby reflection of the IR light L is registered again, the desired navigation in the three-dimensional environment is performed. If the finger 9 is not re-applied to the user surface 8, no navigation will be performed.

As shown schematically in Fig. 2, the IR detector 11 is connected to a timer 15 which in turn is connected to a processor 16 provided in the electronic device. The timer 15 is programmed to start counting when the finger 9 is removed from the user surface 8 of the movable physical member 7 or from its proximity and to stop when the finger 9 is re-applied to the user surface 8. The processor 16 registers the counting and if the counting is within a set limit, i.e. if the finger 9 has been re-applied to the user surface 8 or its proximity within a set time limit, a certain predetermined navigation in the virtual three-dimensional environment is performed.

The timer 15 is preferably provided as software within a processor, but it may also be a separate electronic component. The display 4 is connected to the processor 16 and displays the performed navigation graphically.

A second embodiment of a movable physical member 7' provided in an electronic device according to the invention is shown in Fig. 3. This movable physical member 7' is also movable in the directions of the double arrows P₁ and P₂ as well as being depressable in the direction of the arrow P₃. The movable physical member 7' is provided with a user surface 8' that is a part of a micro switch 17 that is circuited whenever a finger 9 is applied to the user surface 8' of the movable physical member 7'. The micro switch 17 is very sensitive and will always be circuited when a finger 9 is applied to the user surface 8'.

This movable physical member 7' is also connected to a timer 15 that starts counting when the finger 9 is removed from the user surface 8', i.e. when the micro switch 17 is released, and stops when the finger 9 is re-applied to the user surface 8', i.e. when the micro switch 17 is circuited again. The relation and structure of the timer 15, the processor 16 and the display 4 are as described above with reference to Fig. 2.

A third embodiment of a movable physical member 7" provided in an electronic device according to the invention is shown in Fig. 4. This movable physical member 7" is also movable in the directions of the double arrows P₁ and P₂ as well as being depressable in the direction of the arrow P₃. The movable physical member 7" is provided with a user surface 8" that is provided with two conducting plates 18,19 that are short-circuited when a finger 9 is applied to the user surface 8". Such resistive and/or capacitive coupling is a commonly known technique in which application of a finger 9 to the user surface 8" is detectable in a simple and reliable manner.

This movable physical member 7" is also connected to a timer 15 that starts counting when the finger 9 is removed from the user surface 8", i.e. when the two conducting plates 18,19 are no longer short-circuited, and stops when the finger 9 is re-applied to the user surface 8', i.e. when the two conducting plates 18,19 are short-circuited again. The relation and structure of the timer 15, the processor 16 and the display 4 are as described above with reference to Fig. 2.

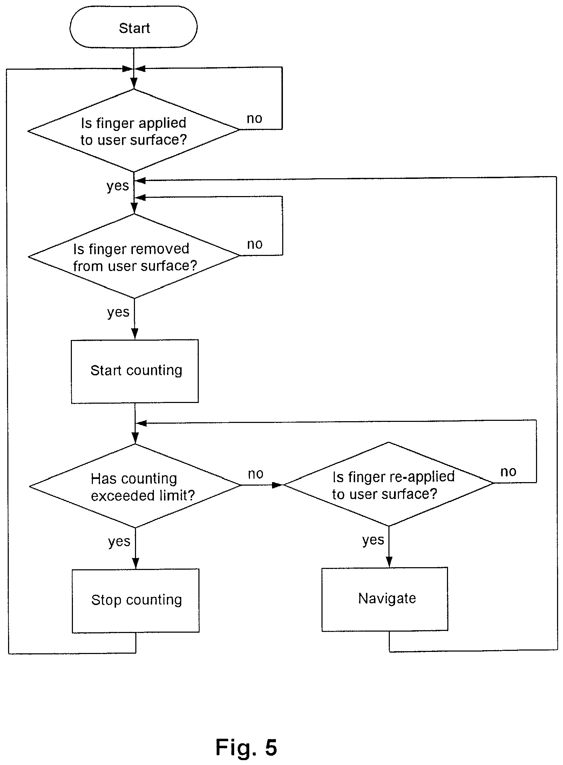

The process performed by the electronic device according to the invention will be described in the following with reference to Fig. 5 that shows a flow chart illustrating this process.

The initial step in the process is to detect whether a finger 9 is applied to the user surface 8,8',8" of the movable physical member 7,7',7". When a finger 9 is applied to the user surface 8,8',8" it must be detected if the finger is removed from the user surface 8,8',8" of the movable physical member 7,7',7" since this may indicate that the navigation in the three dimensional environment according to the invention is to be performed. When it is detected that the finger 9 is removed from the user surface 8,8',8" the timer 15 starts counting. If the finger 9 is not re-applied to the user surface 8,8",8" within a set time limit the timer stops counting and no navigation will be performed. In this case the process may start anew by detecting whether the finger 9 is applied to the user surface 8,8',8" of the movable physical member 7,7',7".

If, however, the finger is re-applied to the user surface 8,8',8" of the movable physical member 7,7',7" within the set time limit the timer stops counting and a navigation according to the invention is performed.

The time limit within which the finger 9 must be re-applied to the user surface 8,8',8" of the movable physical member 7,7',7" in order to obtain the desired navigation can be set as desired. Preferably, however, the time limit is below a few seconds and may be set at e.g. 0.5 second.

If the finger 9 is re-applied to the user surface 8,8',8" of the movable physical member 7,7',7" within the set time limit, the electronic device according to the invention registers it as a desire to perform the navigation in question. If the finger 9 is not re-applied within the set time limit, the electronic device will not treat the removal of the finger 9 as a wish to navigate, but simply as a removal the finger from the user surface 8,8',8" of the movable physical member 7,7',7" and no navigation steps will be performed.

The invention has been described with reference to three embodiments of a movable physical member provided in an electronic device. Other embodiments of the movable physical member are, however, possible, provided that they allow detection of whether a finger is applied to the user surface thereof or not.

## Claims

1. A method of navigating in a hierarchically organized menu system an electronic device (1), wherein a movable physical member (7; 7'; 7") is controlled by applying a finger (9) of a user to the movable physical member (7; 7'; 7"), **characterised in that** navigation in a backwards direction in the hierarchically organized menu system is achieved by removing the finger (9) from the movable physical member (7; 7'; 7") and re-applying it to the movable physical member (7; 7'; 7") within a set time limit.

2. A method according to claim 1, **characterised in that** the set time limit is below a few seconds.

3. A method according to claim 1 or 2, **characterised in that** depressing the moveable physical member activates a command at any chosen position in the hierarchically organized menu system.

4. An electronic device comprising a movable physical member (7; 7'; 7") for navigating in a hierarchically organized menu system, said movable physical member (7; 7'; 7") being arranged for being controlled by a finger (9) of a user applied to a user surface (8; 8'; 8") of the movable physical member (7; 7'; 7"), **characterised in that** the movable physical member (7; 7'; 7") is provided with sensing means for sensing if a finger (9) is applied to the user surface (8; 8'; 8") of the movable physical member (7; 7'; 7"), said sensing means being electrically connected to a timer (15) arranged to start counting when the finger (9) is removed from the user surface (8; 8'; 8") of the movable physical member (7; 7'; 7") and to stop when the finger (9) is re-applied to the user surface (8; 8'; 8") of the movable physical member (7; 7'; 7"), said electronic device being arranged to perform a navigation in a backwards direction in the hierarchically organized menu system if the timer counting is below a set limit.

5. An electronic device according to claim 4, **characterised in that** the sensing means comprises an IR (infra red) diode (10) and an IR detector (11) arranged in such manner that IR light is reflected from the IR diode (10) to the IR detector (11) by the finger (9) when the finger (9) applied to or is in the proximity of the user surface (8) of the movable physical member (7).

6. An electronic device according to claim 5, **characterised in that** the IR diode (10) and the IR detector are positioned at a base of the movable physical member (7), and that two light guides extend from the base of the movable physical member to the user surface (8) of the movable physical member (7).

7. An electronic device according to claim 4, **characterised in that** the sensing means comprises a micro switch (17) provided at the user surface (8') of the movable physical member (7'), said micro switch (17) being depressed when a finger is applied to the user surface (8') of the movable physical member (7').

8. An electronic device according to claim 4, **characterised in that** the sensing means comprises two conductive areas (18, 19) at the user surface (8") of the movable physical member (7"), said two conductive areas (18, 19) being arranged to be electrically short-circuited when a finger (9) is applied to the user surface (8").

9. An electronic device according to any one of claims 4-8, **characterised in that** the electronic device (1) is provided with a display (4) adapted to graphically display at least a part of the menu system.

10. An electronic device according to any one of claims 4-9, **characterised in that** the movable physical member (7; 7'; 7") is a joystick.

11. An electronic device according to any one of claims 4-10, **characterized in that** the moveable physical member (7; 7'; 7") is depressable and arranged to activate a command at any chosen position in the hierarchically organised menu system when depressed.

12. An electronic device according to any one of claims 4-11, **characterised in that** the electronic device (1) is a mobile communications device, such as a mobile telephone.

## Patentansprüche

1. Verfahren zur Navigation in einem hierarchisch organisierten Menüsystem in einer elektronischen Vorrichtung (1), wobei ein bewegliches physisches Bauteil (7; 7'; 7") durch Anlegen eines Fingers (9) eines Nutzers an das bewegliche physische Bauteil (7; 7'; 7") betätigt wird, **dadurch gekennzeichnet, dass** Navigation in eine Rückwärtsrichtung in dem hierarchisch organisierten Menüsystem durch Entfernen des Fingers (9) von dem beweglichen physischen Bauteil (7; 7';7") und Wiederanlegen desselben an das bewegliche physische Bauteil (7; 7'; 7") innerhalb eines bestimmten Zeitlimits erreicht wird.

2. Verfahren nach Anspruch 1, **dadurch gekennzeichnet, dass** das festgesetzte Zeitlimit kürzer als einige Sekunden ist.

3. Verfahren nach Anspruch 1 oder 2, **dadurch gekennzeichnet, dass** Herunterdrücken des beweglichen physischen Bauteils einen Befehl an einer beliebig gewählten Stelle in dem hierarchisch organisierten Menüsystem aktiviert.

4. Elektronische Vorrichtung umfassend ein bewegliches physisches Bauteil (7; 7', 7") zum Navigieren in einem hierarchisch organisierten Menüsystem, wobei das bewegliche physische Bauteil (7; 7'; 7") eingerichtet ist um von einem Finger (9) eines Nutzers angelegt an eine Benutzeroberfläche (8; 8', 8") des beweglichen physischen Bauteils (7; 7'; 7") betätigt zu werden, **dadurch gekennzeichnet, dass** das bewegliche physische Bauteil (7; 7'; 7") mit Erfassungsmitteln ausgestattet ist, um zu erfassen, ob ein Finger (9) an die Nutzeroberfläche (8; 8'; 8") des beweglichen physischen Bauteils (7; 7'; 7") angelegt wird, wobei die Erfassungsmittel elektrisch mit einem Timer (15) verbunden sind, der so eingerichtet ist, dass er zu zählen anfängt, wenn der Finger (9) von der Benutzeroberfläche (8; 8'; 8") des beweglichen physischen Bauteils (7; 7'; 7") entfernt wird und stoppt, wenn der Finger (9) wieder an die Benutzeroberfläche (8; 8'; 8") des beweglichen physischen Bauteils (7; 7'; 7") angelegt wird, wobei das elektronische Gerät eingerichtet ist, eine Navigation in Rückwärtsrichtung in dem hierarchisch organisierten Menüsystem vorzunehmen wenn der Zählwert des Timers unterhalb eines gesetzten Limits ist.

5. Elektronische Vorrichtung nach Anspruch 4, **dadurch gekennzeichnet, dass** die Erfassungsmittel eine IR (Infrarot) Diode (10) und einen IR Detektor (11) umfassen, so angeordnet, dass IR Licht von der IR Diode (10) zu dem IR Detektor (11) von dem Finger (9) reflektiert wird, wenn der Finger (9) an der Nutzeroberfläche (8) des beweglichen physischen Bauteils (7) anliegt oder sich in dessen Nähe befindet.

6. Elektronische Vorrichtung nach Anspruch 5, **dadurch gekennzeichnet, dass** die IR Diode (10) und der IR Detektor sich an der Basis des beweglichen physischen Bauteils (7) befinden, und dass sich zwei Lichtleiter von der Basis des beweglichen physischen Bauteils zu der Benutzeroberfläche (8) des beweglichen physischen Bauteil (7) erstrecken.

7. Elektronische Vorrichtung nach Anspruch 4, **dadurch gekennzeichnet, dass** die Erfassungsmittel einen Miniaturschalter (17) umfassen, der an der Benutzeroberfläche (8") des beweglichen physischen Bauteils (7') bereitgestellt ist, wobei der Mikroschalter (17) niedergedrückt wird, wenn ein Finger auf die Nutzeroberfläche (8') des beweglichen physischen Bauteils (7') angelegt wird.

8. Elektronische Vorrichtung nach Anspruch 4, **dadurch gekennzeichnet, dass** die Erfassungsmittel zwei leitende Flächen (18, 19) auf der Nutzeroberfläche (8") des beweglichen physischen Bauteils (7") umfassen, wobei die zwei leitenden Flächen (18,19) so eingerichtet sind, dass sie elektrisch kurzgeschlossen werden, wenn ein Finger (9) auf die Nutzeroberfläche (8") angelegt wird.

9. Elektronische Vorrichtung nach einem der Ansprüche 4-8, **dadurch gekennzeichnet, dass** die elektronische Vorrichtung (1) mit einem zur grafischen Anzeige zumindest eines Teils des Menüsystems geeigneten Bildschirm (4) ausgestattet ist.

10. Elektronische Vorrichtung nach einem der Ansprüche 4-9, **dadurch gekennzeichnet, dass** das bewegliche physische Bauteil (7; 7'; 7") ein Joystick ist.

11. Elektronische Vorrichtung nach einem der Ansprüche 4-10, **dadurch gekennzeichnet, dass** das bewegliche physische Bauteil (7; 7'; 7") niederdrückbar ist und eingerichtet ist, einen Befehl an einer beliebigen Stelle in dem hierarchisch organisierten Menüsystem im Falle des Niederdrückens auszulösen.

12. Elektronische Vorrichtung nach einem der Ansprüche 4-11, **dadurch gekennzeichnet, dass** die elektronische Vorrichtung (1) ein mobiles Kommunikationsgerät ist, beispielsweise ein Mobiltelefon.

## Revendications

1. Procédé de navigation dans un système de menu organisé hiérarchiquement d'un dispositif électronique (1), dans lequel un élément physique pouvant être déplacé (7 ; 7' ; 7") est commandé par l'application d'un doigt (9) d'un utilisateur sur l'élément physique pouvant être déplacé (7 ; 7' ; 7"), **caractérisé en ce qu'**une navigation dans une direction arrière dans le système de menu organisé hiérarchiquement est effectuée en retirant le doigt (9) de l'élément physique pouvant être déplacé (7 ; 7' ; 7") et en l'appliquant de nouveau à l'élément physique pouvant être déplacé (7 ; 7' ; 7") dans une limite de temps fixée.

2. Procédé selon la revendication 1, **caractérisé en ce que** la limite de temps fixée est inférieure à quelques secondes.

3. Procédé selon la revendication 1 ou 2, **caractérisé en ce que** l'enfoncement de l'élément physique mobile active une commande à n'importe quelle position choisie dans le système de menu organisé hiérarchiquement.

4. Dispositif électronique comprenant un élément physique pouvant être déplacé (7 ; 7' ; 7") pour naviguer dans un système de menu organisé hiérarchiquement, ledit élément physique pouvant être déplacé (7 ; 7' ; 7") étant agencé pour être commandé par un doigt (9) d'un utilisateur appliqué à une surface d'utilisateur (8 ; 8' ; 8") de l'élément physique pouvant être déplacé (7 ; 7' ; 7"), **caractérisé en ce que** l'élément physique pouvant être déplacé (7 ; 7' ; 7") est pourvu de moyens de détection pour détecter si un doigt (9) est appliqué à la surface d'utilisateur (8 ; 8' ; 8") de l'élément physique pouvant être déplacé (7 ; 7' ; 7"), lesdits moyens de détection étant connectés électriquement à un registre d'horloge (15) agencé pour débuter un comptage lorsque le doigt (9) est retiré de la surface d'utilisateur (8 ; 8' ; 8") de l'élément physique pouvant être déplacé (7 ; 7' ; 7") et pour arrêter lorsque le doigt (9) est appliqué de nouveau à la surface d'utilisateur (8 ; 8' ; 8") de l'élément physique pouvant être déplacé (7 ; 7' ; 7"), ledit dispositif électronique étant agencé pour effectuer une navigation dans une direction arrière dans le système de menu organisé hiérarchiquement si le comptage du registre d'horloge est inférieur à une limite fixée.

5. Dispositif électronique selon la revendication 4, **caractérisé en ce que** les moyens de détection comprennent une diode IR (infrarouge) (10) et un détecteur IR (11) agencé d'une manière telle que la lumière IR soit réfléchie de la diode IR (10) vers le détecteur IR (11) par le doigt (9) lorsque le doigt (9) est appliqué à la surface d'utilisateur (8) de l'élément physique pouvant être déplacé (7) ou est à proximité de celle-ci.

6. Dispositif électronique selon la revendication 5, **caractérisé en ce que** la diode IR (10) et le détecteur IR sont positionnés au niveau d'une base de l'élément physique pouvant être déplacé (7), et **en ce que** deux guides de lumière s'étendent de la base de l'élément physique pouvant être déplacé vers la surface d'utilisateur (8) de l'élément physique pouvant être déplacé (7).

7. Dispositif électronique selon la revendication 4, **caractérisé en ce que** les moyens de détection comprennent un micro-commutateur (17) prévu au niveau de la surface d'utilisateur (8') de l'élément physique pouvant être déplacé (7'), ledit micro-commutateur (17) étant enfoncé lorsqu'un doigt est appliqué à la surface d'utilisateur (8') de l'élément physique pouvant être déplacé (7').

8. Dispositif électronique selon la revendication 4, **caractérisé en ce que** les moyens de détection comprennent deux zones conductrices (18, 19) au niveau de la surface d'utilisateur (8") de l'élément physique pouvant être déplacé (7"), lesdites deux zones conductrices (18, 19) étant agencées pour être électriquement en court-circuit lorsqu'un doigt (9) est appliqué à la surface d'utilisateur (8").

9. Dispositif électronique selon l'une quelconque des revendications 4 à 8, **caractérisé en ce que** le dispositif électronique (1) est pourvu d'un afficheur (4) conçu pour afficher graphiquement au moins une partie du système de menu.

10. Dispositif électronique selon l'une quelconque des revendications 4 à 9, **caractérisé en ce que** l'élément physique pouvant être déplacé (7 ; 7' ; 7") est une manette de jeu.

11. Dispositif électronique selon l'une quelconque des revendications 4 à 10, **caractérisé en ce que** l'élément physique pouvant être déplacé (7 ; 7' ; 7") peut être enfoncé et est agencé pour activer une commande à n'importe quelle position choisie dans le système de menu organisé hiérarchiquement lorsqu'il est enfoncé.

12. Dispositif électronique selon l'une quelconque des revendications 4 à 11, **caractérisé en ce que** le dispositif électronique (1) est un dispositif de communication mobile, tel qu'un téléphone mobile.
